# EUROPEAN PATENT APPLICATION

(11) **EP 2 014 585 A2**
(43) Date of publication of application: **14.01.2009**
(21) Application number: 08157912.0
(22) Date of filing: 10.06.2008
(51) Int. Cl.: B65G 17/08

(54) **Mini conveyor system**

(30) Priority: 12.07.2007 IT MI20071389
(71) Applicant: System Plast S.p.A., 24060 Telgate (Bergamo) (IT)
(72) Inventor: Marsetti, Sergio, 24060 Castelli Calepio (Bergamo) (IT)
(74) Representative: Kratter, Carlo

(57) **Abstract**

A mini conveyor system comprising: a plurality of conveyors (1, 2) each formed from a plurality of identical modules (3A-E), each conveyor (1, 2) being guided on a dedicated support structure (5) comprising a mover element (6) and a central support element (7), each module (3A-E) comprising a load-carrying surface (8A-D) and, under said load-carrying surface, a lower surface (18A-E) from which guide means (9) extend, said system comprising a plurality of different conveyors (1, 2), all these different conveyors comprising modules (3A-E) comprising: a load-carrying surface (8A-E) having an area different from the load-carrying surface of the modules of another conveyor of said plurality of conveyors, and the same guide means (9), such that they can slide, be guided and be supported by the same support structure (5), said structure (5) being identical for all said plurality of different conveyors (1, 2).

## Description

The present invention relates to mini conveyor system in accordance with the characterising part of claim 1. In the present context a "mini" conveyor means a conveyor system presenting a plurality of conveyors each comprising a plurality of modules, each presenting a load-carrying surface having a maximum width between 28 mm and 58 mm and a maximum overall conveyor length between 0.5 m and 10 m.

Up to now, conveyors have always been guided on a dedicated support structure having a width substantially identical to the width of the modules forming the conveyor. The expert of the art considers that in order to correctly convey goods, for example bottles, on conveyors, these latter have to be supported and guided on straight or curved rails or tracks which extend along the entire width of the conveyors or at least for most of their lateral portions. This technical solution minimizes the risk of inaccurate positioning or movement causing the conveyor to incline to its support structure with consequent fall and possibly breakage or damage to the goods transported. This well known technical solution has the drawback of requiring a specific support structure for each conveyor width or of needing a specific support structure to be constructed for each of said widths. Consequently conveyor manufacturers must hold a large number of different support structures in store or construct a dedicated support structure for each conveyor.

To overcome these problems the invention provides a mini conveyor system in accordance with claim 1.

Further advantageous embodiments of the invention are represented in the subordinate claims and will be described on the basis of the embodiments shown by way of example in the accompanying drawings, in which:
Figures 1A-B, 2A-B, 3A-B show respectively schematic side, perspective and top views of two different mini conveyor lines according to the invention, of different widths,
Figures 4A-C show respectively a schematic side, top and perspective view of a support structure according to the invention,
Figures 5A-D, 6A-D, 7A-D, 8A-D show respectively schematic perspective, top, side and front views of four different conveyor modules of the invention,
Figures 9A-G show respectively schematic top and bottom perspective, top, front, side and sectional views, these latter taken on the line A-A (Figure 9D) and on the line C-C (Figure 9C), of a further conveyor module of the invention.

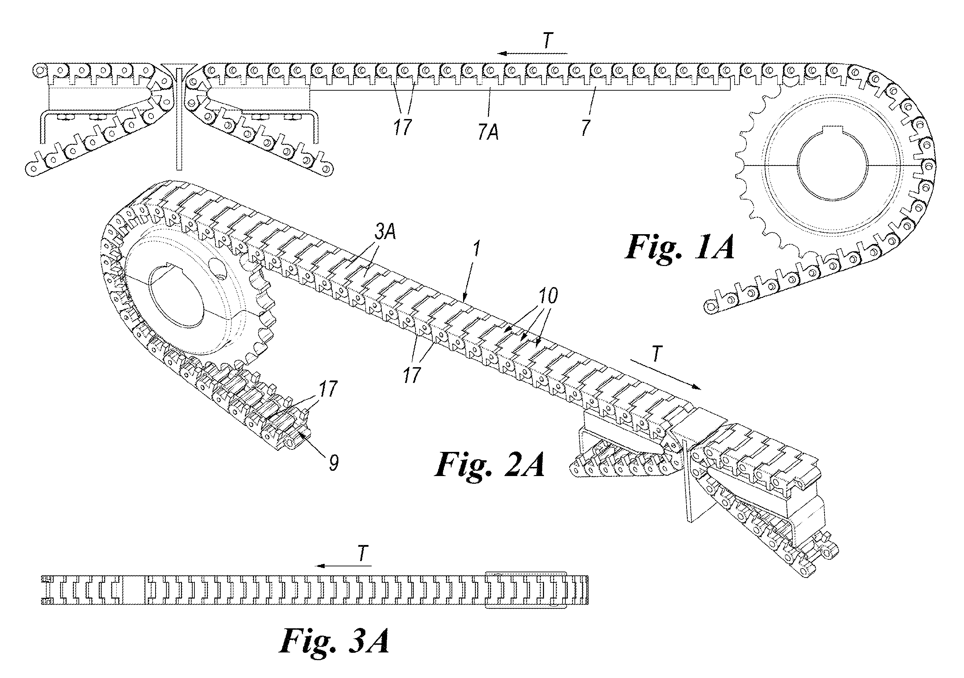

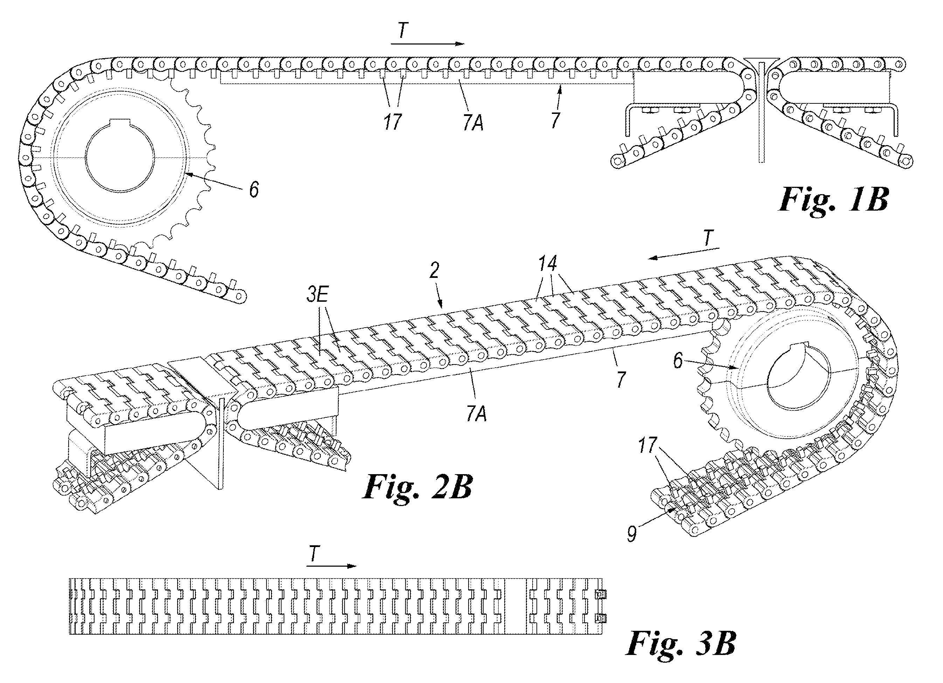

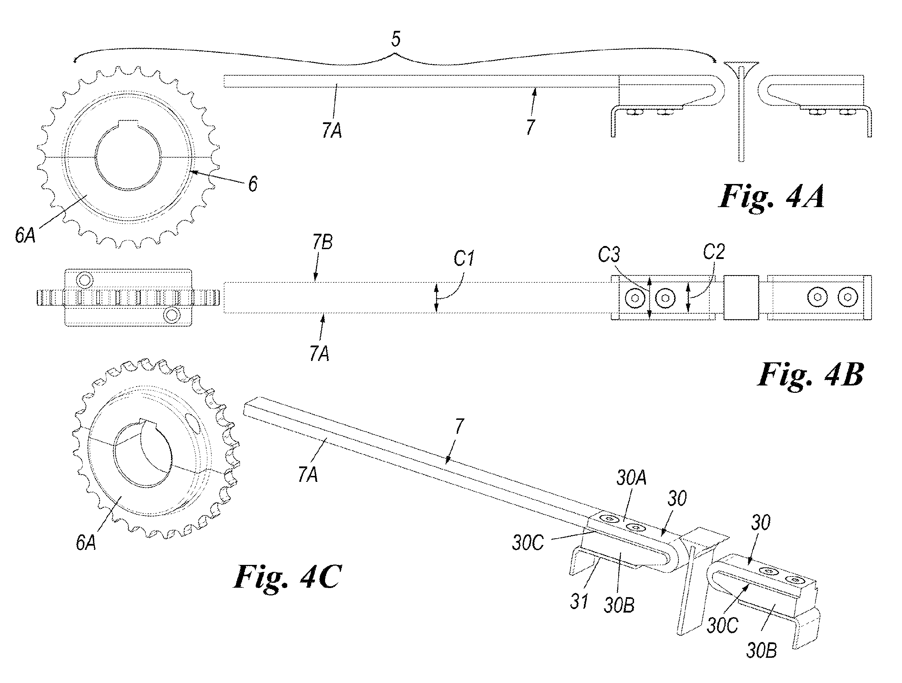

With reference to said drawings, a mini conveyor system according to the invention comprises a plurality of conveyors 1, 2 (Figure 2A, B) each formed from a plurality of identical modules 3A-E. Each of the conveyors 1, 2 is guided on a dedicated support structure 5 (Figure 4A) comprising a mover element 6 and a central support element 7. Each of the modules 3A-E comprises a load-carrying surface 8A-D and, under said load-carrying surface, a lower surface 18A-E from which guide means 9 extend.

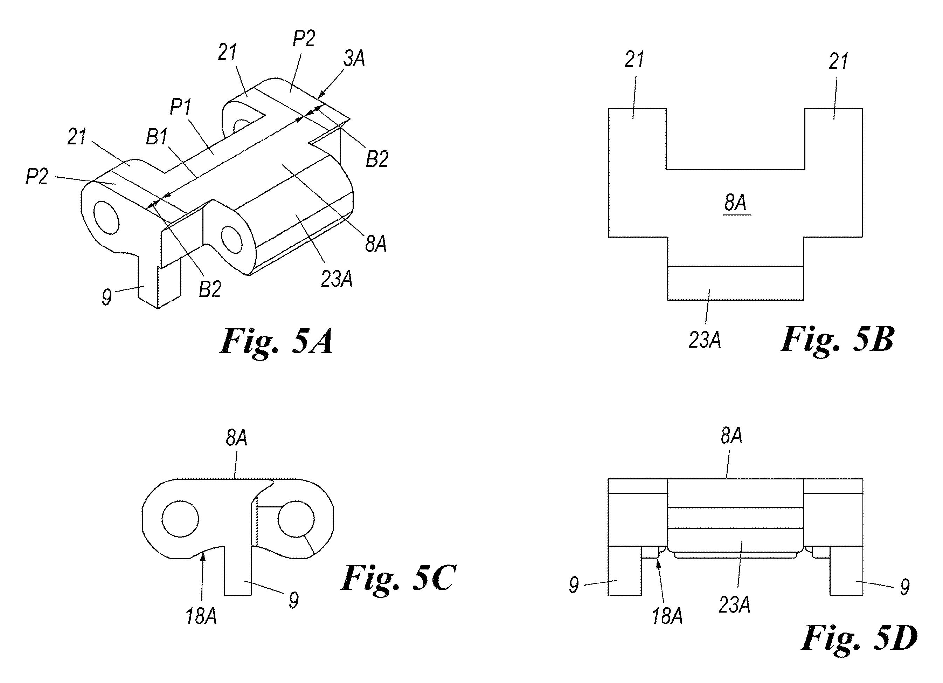

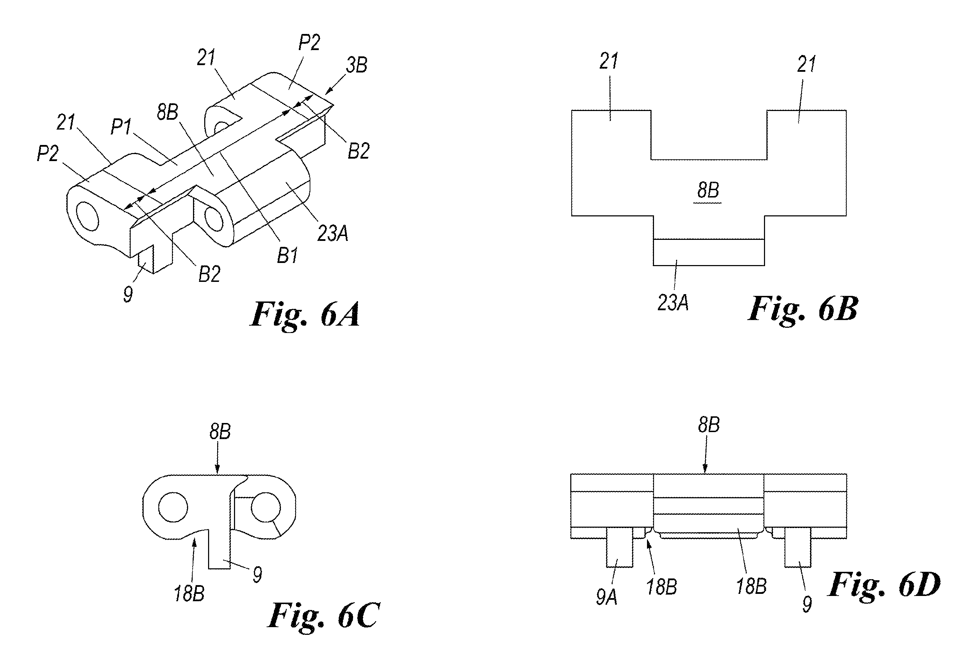

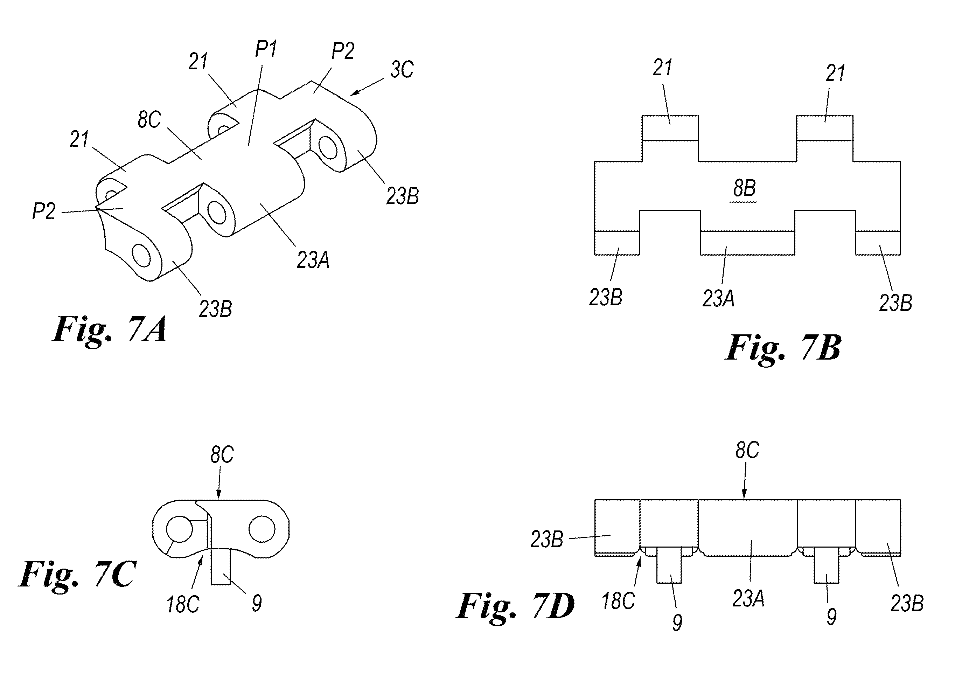

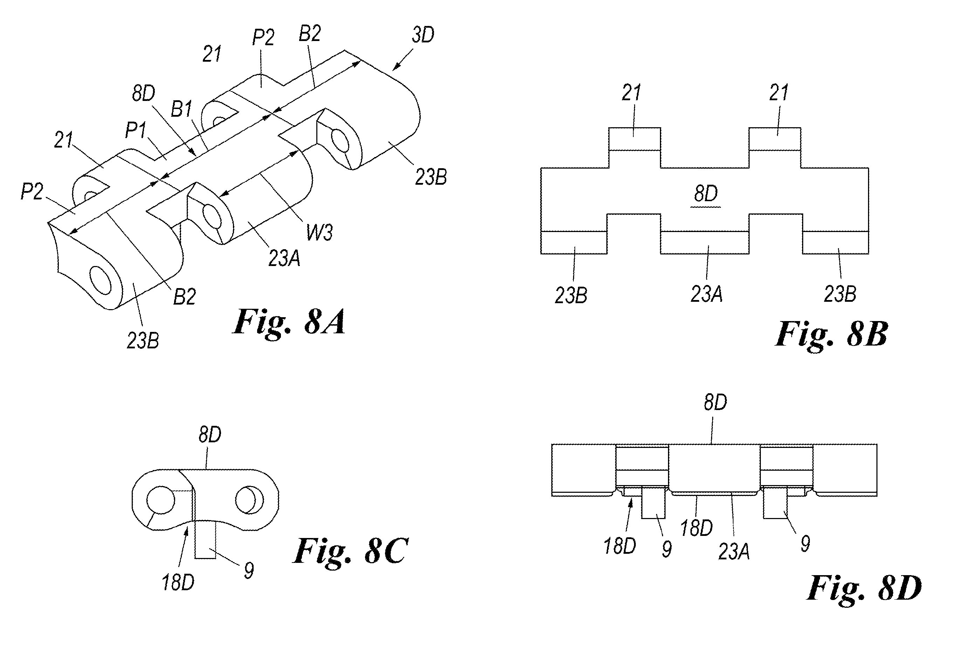

According to the invention, the mini conveyor system comprises a plurality of different conveyors 1, 2 (in Figures 1-3 only two different conveyors 3A and 3E are shown, whereas in Figures 5-9 five different modules 3A-E are shown for forming five different conveyors), all these different conveyors comprising modules 3A-E comprising: a load-carrying surface 8A-E of different area relative to the load-carrying surface of another conveyor of said plurality of conveyors, and the same guide means 9, such that they are able to slide, be guided and be supported by the same support structure 5, said structure 5 being identical for all said plurality of different conveyors 1, 2.

According to the invention, the guide means comprise at least two guide elements 17 which interact with guide counter-means 16 provided in the central support element 7 of the support structure 5, said guide means and counter-means being shaped to ensure that the conveyor follows the layout defined by the central support element 7.

Many different forms for these guide means and counter-means are known, in the accompanying drawings each of the different modules 3A-E comprising two separate spaced-apart guide elements 17 extending from the lower surface 18A-E of said modules which, by sliding on the side walls 7A-B of the central support element 7, ensure that the conveyor follows the layout defined by said central support element. Said side walls 7A-B are hence arranged to act as guide counter-means for the conveyor modules.

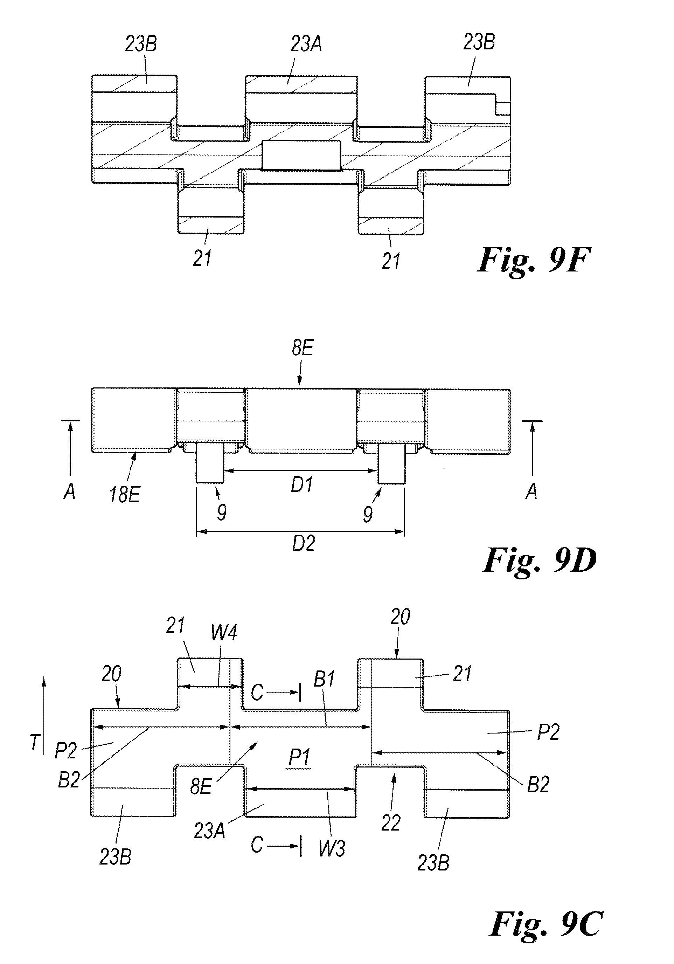

According to the invention, the distance between the two guide elements 17 of each of the different modules 8A-E is always the same, the internal distance D1 (see Figure 9D) between these two elements being preferably 20.75 mm and the external distance D2 being 28 mm. According to the invention, these distances lie within the following ranges: D1 15-30 mm, D2 17-32 mm.

To enable the modules 8A-E to slide on the central element 7 of the support structure the side walls 7A-B of said element are spaced apart by about 1 mm less than the aforesaid internal distance of the guide elements 9.

As indicated above, each module comprises a load-carrying surface 8A-E, this term in the present context identifying the module upper part to be used for transporting products.

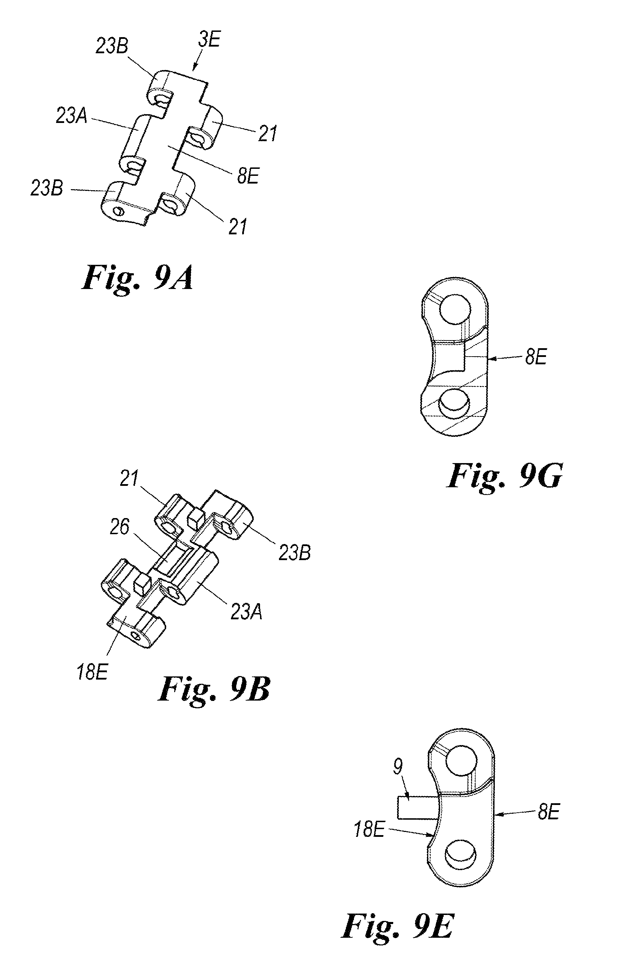

Three adjacent parts can be identified in each module 8A-E: a central part P1 (Figure 9) having a width B1 (Figure 9C) substantially equal to the width C1 (Figure 4B) of the central element 7 of the support structure, and two lateral parts P2 and P3 having identical widths B2, these being external to said central part P1 and not being supported by said central element 7 when the conveyor slides thereon. It has been surprisingly found that by limiting the width B2 of the lateral parts P2 and P3 of the module load-carrying surface compared with the width B1 of their central part P1, a plurality of conveyors can be formed which are always supported by a single identical support structure. According to the invention, the width B2 of the unsupported lateral parts of the load-carrying surface must be between 0 and 3/2 the width B1 of the supported part P1 of the load-carrying surface (i.e. 0>B2>3/2B1) and that B1 must lie between 15 mm and 30 mm (i.e. 15mm>B1>30mm).

It should be noted that this latter limitation, 15mm>B1>30mm, is used in the present context to further qualify the conveyors of the invention as "mini conveyors".

To be able to connect one module to the next, each module comprises a connection system provided between the load-carrying surface 8A-E and the lower surface 18A-E, this connection system comprising on its front side 20 (Figure 9C), extending operationally transverse to the movement direction indicated by the arrow T, two spaced-apart connection elements 21 extending from said side. The module also comprises on the rear side 22, this also extending operationally transverse to the movement direction indicated by the arrow T, from one to three spaced-apart connection elements 23A, B extending from said side. The number of said elements depends on the module width. Preferably, to optimize the module robustness, the rear central connection element 23A is wider than the front connection elements 21, the width W3 of the front central connection element 23A being for example about double the width W4 of the connection elements 21.

Preferably the central connection element 23, the widest of the module, is provided at the part P1 of the load-carrying surface, i.e. that module part which is supported by the central support 7 of the conveyor support structure 5.

The connection elements 23A-B and 21 comprise a transverse through hole for passage of a connection pin (not shown).

The module lower surface 18A-E is of conventional arcuate shape (in side view as in Figures 9 E-G), it being centrally formed, as is usual to the expert of the art, such as to be able to cooperate (Figure 9B) with the teeth of a conventional drive wheel 6A of the mover element 6 of the conveyor support structure.

It should be noted that instead of being shaped to slide along side walls 7A-B of an element 7 of a support structure 5, the guide means could also be shaped and disposed such as to penetrate into one or more longitudinal cavities provided in said central support element. The support structures comprise, at one end of the central element 7, a bar or nosepiece 30 removably secured to conventional support means 31 provided for this purpose.

Preferably the nosepiece 30 comprises an upper part 30A having a width C2 identical to that of the adjacent central element 7, resting on a lower part 30B of greater length C3 and forming with said upper part a step 30C on the two sides of the nosepiece 30. This lower part 30B is adapted to receive the guide elements 17 projecting from the module base. In the case of larger-dimension modules, specific nosepieces can be provided presenting a resting surface having a width substantially equal to that of the module lower surface and two longitudinal grooves for passage of the guide elements 17.

The drawings show a support structure having a straight form in combination with conveyors and modules dedicated to this particular type of layout, the invention however also relating to a central support element having a curved form and a mixed curved and straight form, and modules shaped such as to be able to follow this type of form (i.e. side flexing modules). In this variant the support structure and the side flexing modules would have the same inventive characteristics as aforedescribed.

It should be noted that the invention has been described up to this point with reference to modules and conveyors formed as belt conveyors, however the invention also extends to chain conveyors (i.e. conveyors in which the module connection system is provided under the lower surface of each module and not between the load-carrying surface and the lower surface as in belt conveyors).

## Claims

1. A mini conveyor system comprising: a plurality of conveyors (1, 2), each formed from a plurality of identical modules (3A-E), each conveyor (1, 2) being guided on a dedicated support structure (5) comprising a mover element (6) and a central support element (7), each module (3A-E) comprising a load-carrying surface (8A-D) and, below said load-carrying surface, a lower surface (18A-E) from which guide means (9) extend; **characterised by** comprising a plurality of different conveyors (1, 2), all these different conveyors comprising modules (3A-E) comprising: a load-carrying surface (8A-E) having an area different from the load-carrying surface of the modules of another conveyor of said plurality of conveyors, and the same guide means (9), such that they can slide, be guided and be supported by the same support structure (5), said structure (5) being identical for all said plurality of different conveyors (1, 2).

2. A mini conveyor system as claimed in claim 1, **characterised in that** the modules (3A-E) present a load-carrying surface having a maximum width between 17 mm and 60 mm, the conveyor presenting a length between 0.5 m and 10 m.

3. A mini conveyor system as claimed in claim 1, **characterised in that** the guide means comprise at least one guide element (17) which interacts with guide counter-means (16) provided in the central support element (7) of the support structure (5), said guide means and counter-means being formed such as to ensure that the conveyor follows the layout defined by the support structure central element (7), said guide means comprising two separate spaced-apart guide elements (17) extending from the lower surface (18A-E) of said modules which, by sliding on the side walls (7A-B) of the central support element (7), ensure that the conveyor follows the layout defined by said central support element, said side walls (7A-B) acting as guide counter-means for the conveyor modules.

4. A mini conveyor system as claimed in claim 2, **characterised in that** the distance between the two guide elements (17) of each of the different modules (8A-E) is always the same and that the internal distance (D1) between these two elements lies within the following range: 15mm-30mm.

5. A mini conveyor system as claimed in claim 1, **characterised in that** each module comprises a load-carrying surface (8A-E) presenting three adjacent parts: a central part (P1) having a width (B1) substantially equal to the width (C1) of the central element (7) of the support structure, and two lateral parts (P2, P3) having identical widths (B2), these being external to said central part (P1) and not being supported by said central element (7) when the conveyor slides thereon.

6. A mini conveyor system as claimed in claim 5, **characterised in that** the width (B2) of the side walls (P2, P3) of the module load-carrying surface is between 0 and 3/2 times the width (B1) of the supported part (P1) of the load-carrying surface, said width of the central part being between 15 mm and 30 mm.

7. A mini conveyor system as claimed in claim 1, **characterised in that** in order to be able to connect one module to the next, each module comprises a connection system provided between the load-carrying surface (8A-E) and the lower surface (18A-E), this connection system comprising on its front side (20), extending operationally transverse to the movement direction indicated (T), at least one connection element (21) extending from said side, on the rear side (22), this also extending operationally transverse to the movement direction (T), there being provided at least one connection element (23A, B), the rear central connection element (23A) being wider than the at least one front connection element (21), the width (W3) of the front central connection element (23A) being preferably about double the width (W4) of the rear connection element (21).

8. A mini conveyor system as claimed in one of the preceding claims, **characterised in that** the central connection element (23A), the widest of the module, is provided **in that** module part which is supported by the central support element (7) of the conveyor support structure (5).

9. A mini conveyor system as claimed in claim 1, **characterised in that** the support structure comprises, at one end of the central element (7), an end bar or nosepiece (30) removably secured to support means (31), the nosepiece (30) comprising an upper part (30A) having a width (C2) identical to that of the adjacent central element (7) and resting on a lower part (30B) of greater length (C3), and forming with said upper part a step (30C) or a longitudinal groove on the two sides of the nosepiece (30).
